(19) Europäisches Patentamt
European Patent Office
Office européen des brevets

(11) **EP 1 538 042 B1**

(12) **FASCICULE DE BREVET EUROPEEN**

(45) Date de publication et mention
de la délivrance du brevet:
**01.09.2010   Bulletin 2010/35**

(51) Int Cl.:
***B60T 8/00*** *(2006.01)*     ***B60T 10/00*** *(2006.01)*
***B60T 13/66*** *(2006.01)*     ***B60T 7/12*** *(2006.01)*

(21) Numéro de dépôt: **04300835.8**

(22) Date de dépôt: **01.12.2004**

(54) **Système et procédé de commande de l'accélération d'un véhicule automobile dans une pente**

System und Verfahren zur Steuerung der Beschleunigung eines Kraftfahrzeugs an einem Gefälle

System and method for controlling the acceleration of a vehicle on a slope

(84) Etats contractants désignés:
**AT BE BG CH CY CZ DE DK EE ES FI FR GB GR HU IE IS IT LI LT LU MC NL PL PT RO SE SI SK TR**

(30) Priorité:  **01.12.2003   FR 0314049**

(43) Date de publication de la demande:
**08.06.2005   Bulletin 2005/23**

(73) Titulaire: **Renault**
**92109 Boulogne Billancourt (FR)**

(72) Inventeurs:
• **FERREIRA, Michel**
 **94000, CRETEIL (FR)**
• **LEMINOUX, Gérald**
 **78980, LONGNES (FR)**
• **POTHIN, Richard**
 **92420, VAUCRESSON (FR)**

(56) Documents cités:
**DE-A- 4 420 116      DE-A- 10 039 458**
**DE-A- 19 835 937**

**Description**

La présente invention porte sur un système et un procédé de commande de l'accélération d'un véhicule automobile dans une pente.

Il existe des systèmes permettant d'appliquer des actions de freinage indépendamment de l'action et de la volonté du conducteur. Ces systèmes ont pour objectif d'améliorer le confort et la sécurité des occupants du véhicule et d'assister le conducteur dans les différentes phases de roulage.

L'invention doit assister le conducteur dans les manoeuvres qu'il entreprend sur une pente, afin de rendre son véhicule aussi aisé à manoeuvrer sur de fortes pentes que sur de faibles pentes.

En effet, sur une pente, le véhicule est soumis, en dehors de toute action de la part du conducteur, à une accélération due à la pesanteur. Plus la pente est forte, et plus cette accélération due à la pesanteur est importante, amenant une prise de vitesse de plus en plus grande, plus le conducteur doit réagir rapidement.

La demande de brevet WO99/29531 décrit un système d'assistance à la manoeuvre de parking pour un véhicule, Dans cette demande de brevet, il est prévu de déterminer une situation de manoeuvre principalement au moyen d'une détection de la vitesse de déplacement du véhicule. Aucune indication n'est donnée sur une éventuelle prise en compte de l'accélération du véhicule ni sur une situation de pente de la chaussée.

Aussi, selon l'invention, il est proposé un système de commande de l'accélération d'un véhicule automobile dans une pente, comprenant un système de freinage pilotable et une unité de commande électronique. Le système comprend un capteur de mesure de la vitesse longitudinale du véhicule, des moyens de mesure du couple moteur transmis au véhicule, un capteur de position de la pédale de frein, des moyens de mesure ou d'estimation de la pente de la chaussée sur laquelle est engagé le véhicule, des moyens de traitement aptes à calculer une commande de freinage limitant l'accélération du véhicule en fonction de ladite pente, et des moyens de commande aptes à appliquer ladite commande de freinage aux actionneurs de frein.

Dans un mode réalisation préféré, le système comprend en outre des dispositifs auxiliaires de ralentissement, lesdits moyens de traitement étant aptes à calculer respectivement des commandes de freinage pour lesdits dispositifs auxiliaires de ralentissement, et lesdits moyens de commande étant aptes à appliquer respectivement aux dispositifs auxiliaires de ralentissement lesdites commandes de freinage.

En outre, le système comprend un capteur de position de la pédale d'embrayage et des moyens pour fournir le rapport engagé.

Dans un mode de réalisation avantageux, les moyens de mesure du couple moteur transmis au véhicule comprennent un ou plusieurs capteurs de position d'un embrayage et un capteur de vitesse de rotation du moteur, ou un capteur de rapport de transmission engagé.

Dans un mode réalisation préféré, les moyens de traitement comprennent :

un bloc de pré-traitement recevant en entrée des données comprenant la vitesse algébrique du véhicule, la position de la pédale de frein, la position de la pédale d'embrayage, le couple transmis aux roues motrices, et une valeur indicative du rapport engagé ; et
un bloc de traitement recevant en entrée des données, transmises par ledit bloc de pré-traitement, comprenant la vitesse algébrique du véhicule, une consigne d'accélération, une force représentative de la volonté du conducteur due à l'action du conducteur sur la pédale de frein, une perturbation de freinage, et la force longitudinale transmises aux roues motrices.

Dans un mode de réalisation avantageux, lorsque le véhicule est en outre équipé d'un système de freinage anti-blocage de roues, le bloc de pré-traitement reçoit en outre en entrée un signal indiquant si le système de freinage anti-blocage de roues est actif ou inactif, et s'il est actif, stoppe les moyens de traitement.

Dans un mode de réalisation préféré, le bloc de pré-traitement est apte à calculer la force longitudinale transmise aux roues motrices et à transmettre le résultat au bloc de traitement, ledit calcul utilisant la relation suivante pour une boîte de vitesse mécanique :

$$F_{roues} = \frac{C_{emb}}{R_{boîte} \cdot R_{pont} \cdot Rayon_{r\_m}}$$

dans laquelle:

$F_{roues}$      représente la force longitudinale transmises aux roues motrices, en N ;
$C_{emb}$      est le couple transmis aux roues motrices transmis au bloc de pré-traitement, en Nm ;

$R_{boîte}$ est le rapport des vitesses de rotation de sortie et d'entrée de l'arbre de transmission, dépendant de manière prédéterminée du rapport engagé transmis au bloc de pré-traitement, adimensionnel ;

$R_{pont}$ est le rapport des rayons prédéterminés des engrenages du pont de transmission des roues motrices, adimensionnel ; et

$Rayon_{r\_m}$ est le rayon prédéterminé des roues motrices, en m.

Dans un mode de réalisation avantageux, le bloc de pré-traitement est apte à calculer une consigne d'accélération à destination du bloc, de traitement, par un moyen d'estimation, ou à partir d'une information fournie, par un capteur d'accélération, et à calculer une commande de freinage en utilisant la position de la pédale de frein.

Dans un mode de réalisation préfère, le bloc de pré-traitement est apte à calculer une information indicative de la position du levier de vitesse, afin de pouvoir recalculer la force longitudinale transmises aux roues motrices, lors d'un changement de vitesse.

Par exemple, le bloc de pré-traitement (25) comprend deux entrées booléennes pour calculer ladite information indicative de la position du levier de vitesses au moyen de la relation suivante :

$$gbc = Engagement\_rapport - 2 \times Engagement\_marche\_arrière$$

dans laquelle :

gbc représente l'information indicative de la position du levier de vitesse ;
Engagements-apport est une entrée booléenne représentant l'engagement ou non d'un rapport ; et
Engagement_marche_arrière représentant si oui ou non la marche arrière est enclenchée.

Dans un mode de réalisation avantageux, le bloc de pré-traitement est apte à estimer la perturbation de freinage, ladite perturbation de freinage étant une accélération définie par la relation algébrique suivante :

$$A_{consigne} = A_{moteur} + A_{freinage} + A_{perturbation}$$

dans laquelle

$A_{consigne}$ est l'accélération longitudinale algébrique du véhicule mesurée ou estimée, transmise par le bloc de pré-traitement au bloc de traitement, en m/s$^2$ ;

$A_{moteur}$ est l'accélération longitudinale algébrique, calculée par le bloc de pré-traitement, due aux forces motrices, c'est-àdire le rapport des forces motrices et de la masse du véhicule mesurée ou estimée, en m/s$^2$ ;

$A_{freinage}$ est l'accélération longitudinale algébrique relative à la force représentative de la volonté du conducteur et due à l'action du conducteur sur la pédale de frein, en m/s$^2$ ; et

$A_{perturbation}$ est l'accélération longitudinale algébrique due à des perturbations agissant sur le freinage et calcules par le bloc de pré-traitement, en m/s$^2$.

Dans un mode de réalisation préféré, le bloc de pré-traitement est apte à calculer ladite perturbation par intégration de la différence entre la vitesse estimée par des moyens de calcul de la vitesse du véhicule et la vitesse mesurée, par la méthode de Forward Euler.

Dans un mode de réalisation avantageux, le bloc de traitement est apte à limiter l'accélération du véhicule lorsque la force représentative de la volonté du conducteur, calculée par le bloc de pré-traitement, à partir d'une demande du conducteur, est inférieure à une consigne de freinage calculée par lesdits moyens de traitement, nécessaire pour maintenir l'accélération du véhicule inférieure à celle due à la pente, en comparant la consigne d'accélération à la perturbation de freinage, lorsque la consigne d'accélération, la perturbation, et la vitesse sont de même signe, et la valeur absolue de la consigne d'accélération est inférieure à la valeur absolue de la perturbation, et en calculant ladite commande de freinage pour maintenir l'accélération du véhicule inférieure à celle due à la pesanteur au moyen des équations suivantes :

$$\begin{cases} A_{freinage} = -\left(A_{perturbation} + A_{moteur} - A_{consigne}\right) \\ F_{freinage} = A_{freinage}.M_{véhicule} \end{cases}$$

dans lesquelles :

| | |
|---|---|
| $A_{consigne}$ | est l'accélération longitudinale algébrique du véhicule transmise par le bloc de pré-traitement au bloc de traitement, en m/s$^2$ ; |
| $A_{moteur}$ | est l'accélération longitudinale algébrique, calculée par le bloc de pré-traitement, due aux forces motrices, c'est à dire le rapport des forces motrices et de la masse du véhicule mesurée ou estimée, en m/s$^2$ ; |
| $A_{freinage}$ | est l'accélération longitudinale algébrique relative à la force représentative de la volonté du conducteur et due à l'action du conducteur sur la pédale de frein, en m/s$^2$ ; et |
| $A_{perturbation}$ | est l'accélération longitudinale algébrique due à des perturbations agissant sur le véhicule et calculées par le bloc de pré-traitement, en m/s$^2$ ; |
| $F_{freinage}$ | est la commande de freinage estimée par le bloc de traitement pour maintenir l'accélération du véhicule inférieure à celle due à la pesanteur, en N ; et |
| $M_{véhicule}$ | est la masse du véhicule (1), mesure ou estimée, en kg ; |

et en commandant une comande de freinage égale au maximum de de la force représentative de la volonté du conducteur calculée par les moyens de pré-traitement et de la commande de freinage estimée par les moyens de traitement pour maintenir l'accélération du véhicule inférieure à celle due à la pente.

Selon l'invention, il est également proposé un procédé de commande de l'accélération d'un véhicule automobile. On calcule une consigne de freinage limitant l'accélération du véhicule en fonction de la pente de la chaussée sur laquelle le véhicule est engagé, à partir de données comprenant la vitesse, algébrique du véhicule, la position de la pédale de frein, la position de la pédale d'embrayage, le couple transmis aux roues motrices, et une valeur indicative du rapport engagé et on applique ladite consigne de freinage aux actionneurs de frein.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 est un schéma général d'un système selon un aspect de l'invention ;
- la figure 2 illustre les moyens de traitement d'un système selon l'invention ; et
- la figure 3 est un exemple de réalisation du bloc de traitement.

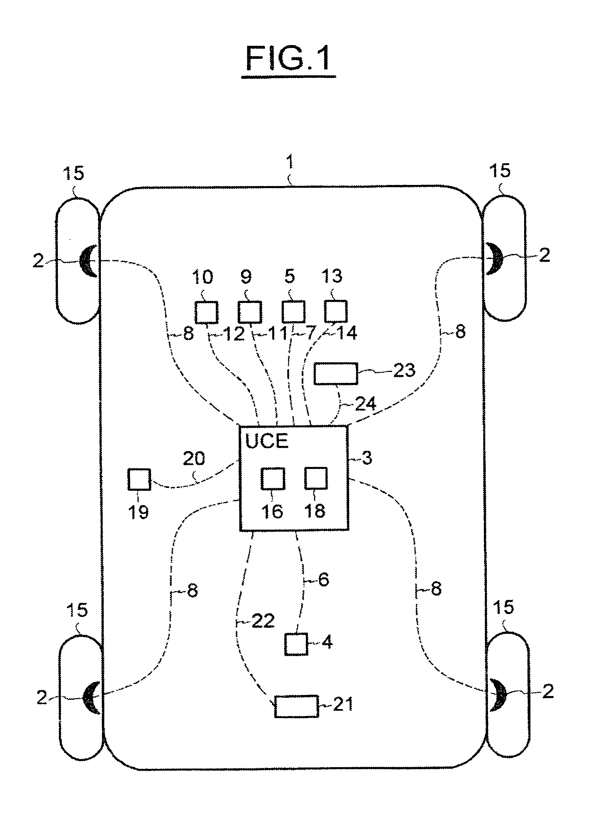

Sur la figure 1, on a représenté un schéma général de l'invention. Le véhicule 1 comprend un système de freinage pilotable permettant d'appliquer un couple de freinage indépendamment sur chaque roue au moyen des actionneurs de frein 2. Le système comprend en outre une unité de commande électronique ou UCE 3, connectée à un capteur 4 de mesure de la vitesse longitudinale du véhicule apte à fournir la vitesse algébrique du véhicule, et à des moyens 5 de mesure du couple moteur transmis au véhicule 1, respectivement par des connexions 6 et 7. Chaque actionneur de frein 2 est connecté à l'unité de commande électronique 3 par une connexion 8. Le système comprend également un capteur de position 9 de la pédale de frein et un capteur de position 10 de la pédale d'embrayage, reliés à l'UCE 3 respectivement par des connexions 11 et 12 à l'UCE 3. Des moyens 13, capables de fournir le rapport engagé sont connectés à l'UCE 3 par une connexion 14. L'UCE 3 est apte à commander une application d'un couple de freinage indépendamment sur chaque roue 15 grâce à des moyens de commande 16 aptes à appliquer une commande de freinage 17 élaborée par des moyens de traitement 18 et transmis aux moyens de commande 16. Les moyens de traitement 18 sont capables de calculer la commande de freinage 17 limitant l'accélération du véhicule 1 en fonction de la pente de la chaussée sur laquelle le véhicule 1 est engagé. La pente de la chaussée est mesurée ou estimée par des moyens 19 reliés à l'unité électronique de commande 3 par une connexion 20.

Le système peut en outre comprendre des dispositifs auxiliaires de ralentissement 21 connectés à l'UCE 3 par une connexion 22. Ces moyens auxiliaires de ralentissement 21 peuvent, par exemple, comprendre un dispositif de ralentissement par effet électromagnétique à courants de Foucault, un dispositif de ralentissement par fermeture de l'échappement, un dispositif de ralentissement par résistance au lever des soupapes, ou plusieurs de ces dits dispositifs. Les moyens de traitement 18 sont alors en outre capables de calculer respectivement des commandes de freinage pour lesdits dispositifs auxiliaires de ralentissement 21, et lesdits moyens de commande 16 sont capables d'appliquer respectivement aux dispositifs auxiliaires de ralentissement 21 lesdites commandes de freinage 17.

Les moyens 5 de mesure du couple moteur transmis au véhicule 1 comprennent, par exemple, un ou plusieurs capteurs de position d'un embrayage et un capteur de vitesse de rotation du moteur, ou un capteur de rapport de transmission engagé.

Le système peut en outre comprendre un système anti-blocage de roues ou ABS 23, connecté à l'UCE 3 par une connexion 24.

L'unité électronique de commande 3 reçoit des informations du capteur 4 de mesure de la vitesse longitudinale du véhicule, des moyens 5 de mesure du couple moteur transmis au véhicule 1, du capteur 9 de position de la pédale de frein, du capteur 10 de position de la pédale d'embrayage, des moyens 13 capables de fournir le rapport engagé, et éventuellement du système ABS 23.

Si on ne dispose pas de moyen apte à fournir le rapport engagé, on peut le recalculer, comme indiqué plus loin.

Le signal en provenance du système ABS 23 indique si le système ABS 23 est actif ou inactif, et s'il est actif, les moyens de traitement 18 arrêtent le procédé selon l'invention.

Les moyens de traitement 18 évaluent, à partir de ces données, une commande de l'accélération du véhicule 1, et l'applique au véhicule 1.

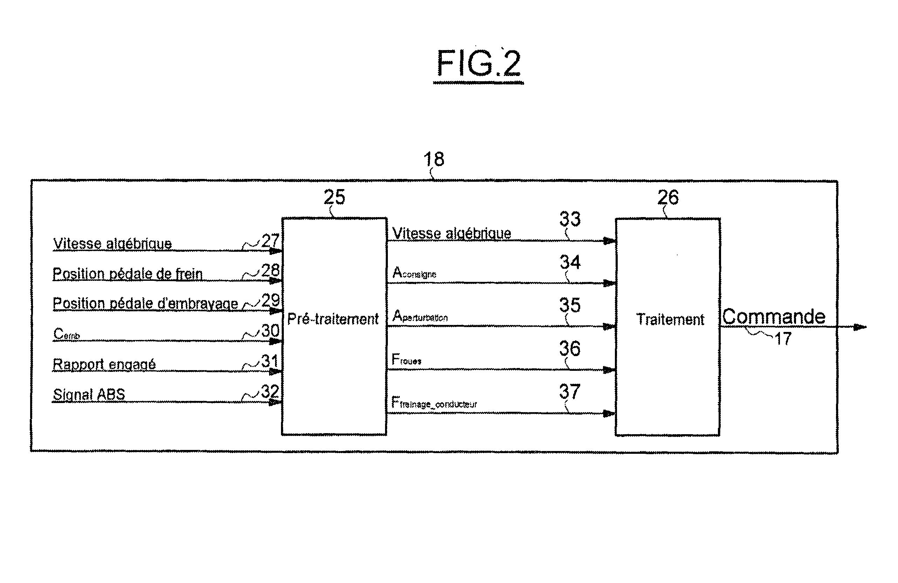

La figure 2 illustre le fonctionnement des moyens de traitement 11 d'un système selon l'invention.

Les moyens de traitement 18 comprennent un bloc de pré-traitement 25 et un bloc de traitement 26.

La vitesse du véhicule est transmise au bloc de pré-traitement 25 par une connexion 27, la position de la pédale de frein est transmise au bloc de pré-traitement 25 par une connexion 28, et la position de la pédale d'embrayage est transmise au bloc de pré-traitement 25 par une connexion 29. En outre, le couple $C_{emb}$ fourni par le moteur est transmis par une connexion 30, et le rapport engagé de la boîte de vitesse est transmis au bloc de pré-traitement 25 par une connexion 31.

Si l'information du rapport engage n'est pas disponible sur le véhicule 1, des moyens peuvent l'estimer, par exemple, à partir de capteurs situés au niveau du levier de vitesses.

Une entrée optionnelle 32 peut être connectée au bloc de pré-traitement 25 pour fournir un signal permettant de déterminer si le système de freinage anti-blocage de roues, par exemple un système ABS.

Le bloc de pré-traitement 25 transmet des données par des au bloc de traitement 26. Une connexion 33 transmet la vitesse algébrique du véhicule 1, une connexion 34 transmet une consigne d'accélération $A_{consigne}$ du véhicule 1, une connexion 35 transmet une perturbation $A_{perturbation}$, une connexion 36 transmet une force longitudinale appliquée aux roues motrices $F_{roues}$, et une connexion 37 transmet une force $F_{freingae\_conducteur}$ représentative de la volonté du conducteur, et due à l'action du conducteur sur la pédale de frein.

Le bloc de pré-traitement 25 calcule la force longitudinale $F_{roues}$ appliquée aux roues motrices qui apparaît sur la sortie 36 du bloc de pré-traitement 25, dans le cas d'une boîte de vitesse mécanique, au moyen de la relation :

$$F_{roues} = \frac{C_{emb}}{R_{boîte} \cdot R_{pont} \cdot Rayon_{r\_m}}$$

dans laquelle;

| | |
|---|---|
| $F_{roues}$ | représente la force longitudinale transmises aux roues motrices, en N ; |
| $C_{emb}$ | est le couple transmis aux roues motrices transmis au bloc de pré-traitement 25 par l'entrée 27, en Nm ; |
| $R_{boîte}$ | est le rapport des vitesses de rotation de sortie et d'entrée de l'arbre de transmission, dépendant de manière prédéterminée du rapport engagé transmis au bloc de pré-traitement 25 par l'entrée 31, adimensionnel ; |
| $R_{pont}$ | est le rapport des rayons prédéterminés des engrenages du pont de transmission des roues motrices, adimensionnel ; et |
| $Rayon_{r\_m}$ | est le rayon prédéterminé des roues motrices, en m. |

Les valeurs prédéterminées de $R_{boîte}$, $R_{pont}$, et $Rayon_{r\_m}$ sont stockées en mémoire par des moyens de mémorisation non représentés du bloc de pré-traitement 25.

En outre, le bloc de pré-traitement 25 utilise une fonction interne lui permettant de savoir quand le levier de vitesse passe par le point mort, pour pouvoir recalculer la force longitudinale appliquée aux roues motrices lors d'un changement de vitesse.

Un exemple de fonction interne au bloc de pré-traitement 25 permettant de fournir une information représentative de la position du levier de vitesses est une fonction appelée gbc. Cette fonction gbc est calculée à partir de deux entrées de type tout ou rien ou booléennes, b_rapport_engagé, et b_marche_arrière, non représentées sur la figure 2. L'entrée b_rapport_engagé vaut zéro lorsque le levier de vitesse est au point mort, et un lorsqu'un rapport est engage. L'entrée b_marche_arrière vaut un quand la marche arrière est enclenchée et zéro sinon.

La fonction gbc est définie par la relation suivante : gbc = b_rapport _engagé- 2 × b_marche_ amère

Au point mort, on a alors gbc=0, en marche arrière gbc=-1, et quand une des vitesses autre que la marche arrière est enclenchée, gbc=1.

De plus, le bloc de pré-traitement 25 estime une perturbation $A_{perturbation}$ définie par la relation suivante :

$$A_{consigne} = A_{moteur} + A_{freinage} + A_{perturbation}$$

dans laquelle :

| | |
|---|---|
| $A_{consigne}$ | est l'accélération longitudinale algébrique du véhicule transmise par la connexion 34 au bloc de traitement 26, en m/s$^2$; |
| $A_{moteur}$ | est l'accélération longitudinale algébrique, calculée. par le bloc de pré-traitement 25, due aux forces motrices $F_{roues}$, c'est à dire le rapport des forces motrices $F_{roues}$ et de la masse du véhicule $M_{véhicule}$ mesurée ou estimée par des moyens non représentés, en m/s$^2$ ; |
| $A_{freinage}$ | est l'accélération longitudinale algébrique relative à la force $F_{freinage\_conducteur}$ représentative de la volonté du conducteur et due à l'action du conducteur sur la pédale de frein, en m/s$^2$ ; et |
| $A_{perturbation}$ | est l'accélération longitudinale algébrique due à des perturbations agissant sur le véhicule et calculées par le bloc de pré-traitement 25, en m/s$^2$ . |

Une réalisation possible pour estimer la perturbation $A_{perturbation}$ peut être faite au moyen d'un modèle du système de freinage, et d'une estimation de la vitesse du véhicule à partir de la valeur fournie par un capteur de vitesse et de la commande envoyée aux actionneurs de freins.

La différence entre la vitesse estimée et mesurée par le capteur permet de déduire la perturbation $A_{perturbation}$ par intégration dite de Forward-Euler.

Le bloc de pré-traitement 25 transmet alors au bloc de traitement 26, la vitesse algébrique du véhicule par une connexion 33, la consigne d'accélération $A_{consigne}$ par une connexion 34, la perturbation $A_{perturbation}$ par une connexion 35, la force longitudinale. $F_{roues}$ appliquée aux roues motrices par une connexion 36, et la force $F_{freinage\_conducteur}$ représentative de la volonté du conducteur et due à l'action du conducteur sur la pédale de frein, par une connexion 37.

Le bloc de traitement 26 limite l'accélération du véhicule 1 lors des phases de manoeuvre, y compris lors de changement du sens de marche du véhicule 1.

Le bloc de traitement 26 compare en permanence la consigne d'accélération $A_{consigne}$ transmise par la connexion 34 et la perturbation $A_{perturbation}$. La consigne d'accélération $A_{consigne}$, n'agissant que sur le freinage, n'est réalisable que sous plusieurs conditions : la consigne d'accélération $A_{consigne}$ et la perturbation $A_{perturbation}$ doivent être de même signe, et la valeur absolue de la consigne d'accélération $A_{consigne}$ doit être inférieure à la valeur absolue de la perturbation $A_{perturbation}$. En effet, l'accélération du véhicule 1 ne peut pas être supérieure à celle qui aurait été obtenue naturellement en roues libres. En outre, la consigne d'accélération $A_{consigne}$ doit avoir le même signe que la vitesse du véhicule 1. Cette condition permet au système de rester actif uniquement lorsque la vitesse, l'accélération et la consigne d'accélération $A_{consigne}$ sont de même signe, c'est-à-dire lorsque le véhicule dévale la pente.

Le calcul de la commande de freinage 17 effectué par le bloc de traitement 26, lorsqu'il est valide par rapport aux conditions précédemment citées, utilise les relations suivantes :

$$\begin{cases} A_{freinage} = -\left(A_{perturbation} + A_{moteur} - A_{consigne}\right) \\ F_{freinage} = A_{freinage} \times M_{véhicule} \end{cases}$$

dans lesquelles :

| | |
|---|---|
| $A_{consigne}$ | est l'accélération longitudinale algébrique du véhicule transmise par la connexion 34 au bloc de traitement 26, en m/s$^2$ ; |
| $A_{moteur}$ | est l'accélération longitudinale algébrique, calculée par le bloc de pré-traitement 25, due aux forces motrices $F_{roues}$, c'est à dire le rapport des forces motrices $F_{roues}$ et de la masse du véhicule mesurée ou estimée par des moyens non représentés, en m/s$^2$ ; |
| $A_{freinage}$ | est l'accélération longitudinale algébrique relative à la force $F_{freinage\_conducteur}$ représentative de la volonté du conducteur et due à l'action du conducteur sur la pédale de frein, en m/s$^2$ ; et |
| $A_{perturbation}$ | est l'accélération longitudinale algébrique due à des perturbations calculées par le bloc de pré-traitement 25, en m/s$^2$ ; |
| $F_{freinage}$ | est la commande de freinage estimée par les moyens de traitement 26 pour maintenir l'accélération du véhicule inférieure à celle due à la pesanteur, en N ; et |
| $M_{véhicule}$ | est la masse du véhicule 1, mesuré ou estimée par des moyens non représentés sur les figures, en kg ; |

En variante, la consigne $A_{consigne}$ peut être calculée au moyen de la relation suivante :

$$F_{\text{freinage}} = \max\left[\left(F_{\text{pente}} - F_{\text{roues}}\right), \min\left(F_{\text{freinage\_conducteur}}, F_{\text{pente}}\right)\right]$$

dans laquelle :

| | |
|---|---|
| $F_{\text{freinage}}$ | est la commande de freinage, enN, |
| $F_{\text{pente}}$ | est la force longitudinale exercée par la pente sur le véhicule 1, en N, |
| $F_{\text{roues}}$ | est la force longitudinale motrice transmises aux roues motrices, en N, et |
| $F_{\text{freinage\_conducteur}}$ | est la force représentative de la volonté du conducteur et due à l'action du conducteur sur la pédale de frein, en N, |

ces forces étant calculées par des moyens connus de l'homme du métier.

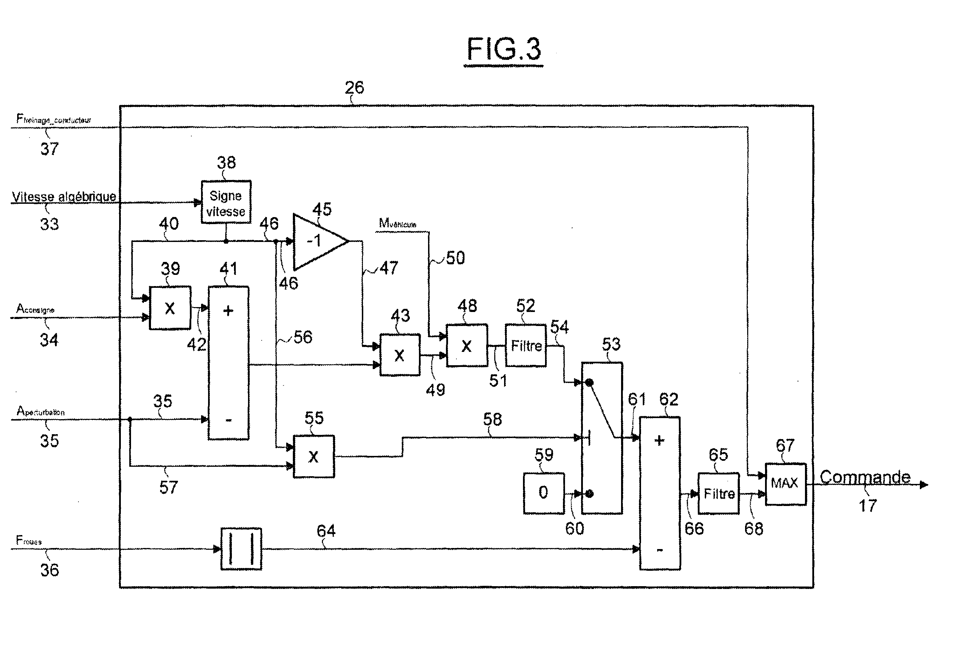

La figure 3 illustre un exemple de réalisation du bloc de traitement (26). On stocke dans une mémoire 38 le signe de la vitesse algébrique transmis par la connexion 33. Ce signe est transmis à un module de multiplication 39 par une connexion 40, afin de multiplier la consigne d'accélération $A_{\text{consigne}}$ par le signe de la vitesse algébrique. Le résultat de cette multiplication est transmis à un module additionneur/soustracteur 41 par une connexion 42. Le module additionneur/soustracteur 41 soustrait au résultat transmis par la connexion 42, la perturbation $A_{\text{perturbartion}}$ transmise par la connexion 35, et transmet le résultat à un module de multiplication 43 par une connexion 44. Le signe de la vitesse est transmis de la mémoire 38 à un module inverseur 45 par une connexion 46, qui change le signe de la vitesse algébrique en son opposé, et transmet le résultat au module de multiplication 43 par une connexion 47. Le module de multiplication 43 multiplie alors les deux valeurs reçues par les connexions 44 et 47, et transmet le résultat à un module de multiplication 48 par une connexion 49. Une connexion 50 transmet également au module de multiplication 48 la masse du véhicule $M_{\text{véhicule}}$ qui multipliée par l'accélération transmise par la connexion 49 donne une force, transmise par une connexion 51 à un filtre 52 qui transmet la valeur en entrée si elle est positive et une valeur nulle sinon. La sortie du filtre 52 est transmise à un élément de sélection 53 par une connexion 54.

En outre, le signe de la vitesse algébrique est transmis à un module de multiplication 55 par une connexion 56, et la perturbation $A_{\text{perturbatuion}}$ par une connexion 57. Le module 57 effectue le produit de ses deux entrées, et transmet le résultat au module de sélection 53 par une connexion 58. Si la valeur transmise par la connexion 58 est positive, alors le module de sélection 53 sélectionne et transmet l'entré transmise par la connexion 54, et transmet sinon la valeur nulle stockée dans une mémoire 59 et transmise par une connexion 60. La sortie du module de sélection 53 est transmise par une connexion 61 à un module additionneur/soustracteur 62, qui va soustraire à cette valeur la valeur absolue de la force longitudinale appliquée aux roues motrices $F_{\text{roues}}$. La valeur absolue de la force longitudinale appliquée aux roues motrices $F_{\text{roues}}$ est calculée par un module 63, qui reçoit en entrée la force longitudinale appliquée aux roues motrices $F_{\text{roues}}$ par la connexion 36, et est transmise par une connexion 64 au module additionneur/soustracteur 62. Le résultat du calcul effectué par le module additionneur soustracteur 62 est transmis à un filtre 65 par une connexion 66. Le filtre 65 transmet la valeur en entrée si elle est positive et une valeur nulle sinon. La sortie du filtre 65 est transmise à un élément de sélection de maximum 67 par une connexion 68. L'élément de sélection de maximum 67 reçoit également en entrée, par la connexion 37, la force $F_{\text{freinage\_conducteur}}$ due à l'action du conducteur sur la pédale de frein, et transmet en sortie le maximum des deux valeurs reçues par les entrées 37 et 68 la commande de freinage 17 destinée aux actionneurs de freins 2.

L'invention permet donc d'assister le conducteur d'un véhicule lorsqu'il effectue des manoeuvres en pente, en rendant le véhicule aussi aisé à conduire sur une forte pente que sur une faible pente ou en l'absence de pente.

## Revendications

1. Système de commande de l'accélération d'un véhicule automobile (1) dans une pente, comprenant un système de freinage pilotable et une unité de commande électronique (3), **caractérisé en ce qu'**il comprend un capteur (4) de mesure de la vitesse longitudinale du véhicule, des moyens (5) de mesure du couple moteur transmis aux roues du véhicule (1), un capteur de position (9) de la pédale de frein, un capteur (10) de position de la pédale d'embrayage, des moyens (13) capables de fournir le rapport engagé des moyens (19) de mesure ou d'estimation de la pente de la chaussée sur laquelle est engagé le véhicule (1), des moyens de traitement (18) aptes à calculer une commande de freinage (17) limitant l'accélération du véhicule (1) en fonction de ladite pente, à partir de données comprenant la vitesse algébrique du véhicule, la position de la pédale de frein, la position de la pédale d'embrayage, le couple transmis aux roues motrices, et une valeur indicative du rapport engagé et des moyens de commande (16) aptes à appliquer ladite commande de freinage aux actionneurs de frein (2).

**2.** Système selon la revendication 1, **caractérisé en ce qu'**il comprend en outre des dispositifs auxiliaires de ralentissement (21), lesdits moyens de traitement (18) étant aptes à calculer respectivement des commandes de freinage pour lesdits dispositifs auxiliaires de ralentissement (21), et lesdits moyens de commande (16) étant aptes à appliquer respectivement aux dispositifs auxiliaires de ralentissement (21) lesdites commandes de freinage.

**3.** Système selon la revendication 1 ou 2, **caractérisé en ce qu'**il comprend en outre un capteur de position (10) de la pédale d'embrayage et des moyens (13) pour fournir le rapport engagé.

**4.** Système selon l'une quelconque des revendications 1 à 3, **caractérisé en ce que** les moyens (5) de mesure du couple moteur transmis au véhicule (1) comprennent un ou plusieurs capteurs de position d'un embrayage et un capteur de vitesse de rotation du moteur, ou un capteur de rapport de transmission engagé.

**5.** Système selon la revendication 3 ou 4, **caractérisé en ce que** les moyens de traitement (18) comprennent :

un bloc de pré-traitement (25) recevant en entrée des données comprenant la vitesse algébrique du véhicule, la position de la pédale de frein, la position de la pédale d'embrayage, le couple transmis aux roues motrices, et une valeur indicative du rapport engagé : et
un bloc de traitement (26) recevant en entrée des données, transmises par ledit bloc de pré-traitement, comprenant la vitesse algébrique du véhicule, une consigne d'accélération, une force représentative de la volonté du conducteur due à l'action du conducteur sur la pédale de frein, une perturbation de freinage, et la force longitudinale transmises aux roues motrices.

**6.** Système selon la revendication 5, **caractérisé en ce que**, lorsque le véhicule (1) est en outre équipé d'un système de freinage anti-blocage de roues (15), le bloc de pré-traitement (25) reçoit en outre en entrée un signal indiquant si le système de freinage anti-blocage de roues est actif ou inactif, et s'il est actif, stoppe les moyens de traitement (18).

**7.** Système selon la revendication 5 ou 6, **caractérisé en ce que** le bloc de pré-traitement (25) est apte à calculer la force longitudinale ($F_{roues}$) transmise aux roues motrices et à transmettre le résultat au bloc de traitement (26), ledit calcul utilisant la relation suivante pour une boîte de vitesse mécanique :

$$F_{roues} = \frac{C_{emb}}{R_{boîte}.R_{pont}.Rayon_{r\_m}}$$

dans laquelle:

$F_{roues}$ représente la force longitudinale transmises aux roues motrices, en N ;
$C_{emb}$ est le couple transmis aux roues motrices transmis au bloc de pré-traitement (25), en Nm :
$R_{boîte}$ est le rapport des vitesses de rotation de sortie et d'entrée de l'arbre de transmission, dépendant de manière prédéterminée du rapport engagé transmis au bloc de pré- traitement (25), adimensionnel ;
$R_{pont}$ est le rapport des rayons prédéterminés des engrenages du pont de transmission des roues motrices, adimensionnel; et
$Rayon_{r\_m}$ est le rayon prédéterminé des roues motrices, en m.

**8.** Système selon l'une quelconque des revendications 5 à 7, **caractérisé en ce que** le bloc de pré-traitement (25) est apte à calculer une consigne d'accélération à destination du bloc de traitement (26), par un moyen d'estimation, ou à partir d'une information fournie par un capteur d'accélération, et à calculer une commande de freinage en utilisant la position de la pédale de frein (9).

**9.** Système selon l'une quelconque des revendications 5 à 8, **caractérisé en ce que** le bloc de pré-traitement (25) est apte à calculer une information indicative de la position du levier de vitesses, afin de pouvoir recalculer la force longitudinale ($F_{roues}$) transmises aux roues motrices, lors d'un changement de vitesse.

**10.** Système selon la revendication 9, **caractérisée en ce que** le bloc de pré-traitement (25) comprend deux entrées booléennes pour calculer ladite information indicative de la position du levier de vitesses au moyen de la relation suivante :

$$\text{gbc} = \text{Engagement\_rapport} - 2 \times \text{Engagement\_marche\_arrière}$$

dans laquelle :

gbc représente l'information indicative de la position du levier de vitesse ;
Engagement_rapport est une entrée booléenne représentant l'engagement ou non d'un rapport ; et
Engagement_marche_arrière représentant si oui ou non la marche arrière est enclenchée.

**11.** Système selon l'une quelconque des revendication 5 à 9, **caractérisé en ce que** le bloc de pré-traitement (25) est apte à estimer la perturbation, ladite perturbation étant une accélération définie par la relation algébrique suivante :

$$A_{consigne} = A_{moteur} + A_{freinage} + A_{perturbation}$$

dans laquelle

$A_{consigne}$ est l'accélération longitudinale algébrique du véhicule transmise par le bloc de pré-traitement (25) au bloc de traitement (26), en m/s$^2$ ;
$A_{moteur}$ est l'accélération longitudinale algébrique, calculée par le bloc de pré-traitement (25), due aux forces motrices ($F_{roues}$), c'est-à-dire le rapport des forces motrices ($F_{roues}$) et de la masse du véhicule ($M_{véhicule}$) mesurée ou estimée, en m/s$^2$ ;
$A_{freinage}$ est l'accélération longitudinale algébrique relative à la force représentative de la volonté du conducteur et due à l'action du conducteur sur la pédale de frein, en m/s$^2$ ; et
$A_{perturebation}$ est l'accélération longitudinale algébrique due à des perturbations agissant sur le véhicule, et calculées par le bloc de pré-traitement (25), en m/s$^2$.

**12.** Système selon la revendication 10, **caractérisé en ce que** le bloc de pré-traitement (25) est apte à calculer ladite perturbation par intégration de la différence entre la vitesse estimée par des moyens de calcul de la vitesse du véhicule (1) et la vitesse mesurée, par la méthode de Forward Euler.

**13.** Système selon la revendication 10 ou 11, **caractérisé en ce que** le bloc de traitement (26) est apte à limiter l'accélération du véhicule (1) lorsque la force représentative de la volonté du conducteur, calculée par le bloc de pré-traitement (25), est inférieure à une consigne de freinage calculée par ledit bloc de traitement (26), nécessaire pour maintenir l'accélération du véhicule (1) inférieure à celle due à la pente,
en comparant la consigne d'accélération à la perturbation, lorsque la consigne d'accélération, la perturbation, et la vitesse sont de même signe, et la valeur absolue de la consigne d'accélération est inférieure à la valeur absolue de la perturbation, et en calculant ladite commande de freinage pour maintenir l'accélération du véhicule inférieure à celle due à la pente au moyen des équations suivantes :

$$\begin{cases} A_{freinage} = -\left(A_{perturbation} + A_{moteur} - A_{consigne}\right) \\ F_{freinage} = A_{freinage} \cdot M_{véhicule} \end{cases}$$

dans lesquelles:

$A_{consigne}$ est l'accélération longitudinale algébrique du véhicule transmise par le bloc de pré-traitement (25) au bloc de traitement (26), en m/s$^2$ ;
$A_{moteur}$ est l'accélération longitudinale algébrique, calculée par le bloc de pré-traitement (25), due aux forces motrices ($F_{roues}$), c'est à dire le rapport des forces motrices ($F_{roues}$) et de la masse du véhicule ($M_{véhicule}$) mesurée ou estimée, en m/s$^2$ ;
$A_{freinage}$ est l'accélération longitudinale algébrique relative à la force représentative de la volonté du conducteur et due à l'action du conducteur sur la pédale de frein, en m/s$^2$ ; et
$A_{pertarbation}$ est l'accélération longitudinale algébrique due à des perturbations agissant sur le véhicule et calculées par le bloc de pré-traitement (25), en m/s$^2$ ;

P$_{freinage}$ est la commande de freinage estimée par le bloc de traitement (26) pour maintenir l'accélération du véhicule inférieure à celle due à la pesanteur, en N ; et

M$_{véhicule}$ est la masse du véhicule (1), mesuré ou estimée, en kg ; et en commandant une commande de freinage égale au maximum de la force représentative de la volonté du conducteur calculée par le bloc de pré-traitement (25) et de la commande de freinage estimé par le bloc de traitement (26) pour maintenir l'accélération du véhicule inférieure à celle due à la pente.

14. Procédé de commande de l'accélération d'un véhicule automobile (1), **caractérisé en ce que** l'on calcule une commande de freinage limitant l'accélération du véhicule (1) en fonction de la pente de la chaussée sur laquelle le véhicule (1) est engagé, à partir de données comprenant la vitesse algébrique du véhicule, la position de la pédale de frein, la position de la pédale d'embrayage, le couple transmis aux roues motrices, et une valeur indicative du rapport engagé et on applique ladite commande de freinage aux actionneurs de frein.

## Claims

1. System for controlling the acceleration of a motor vehicle (1) on a slope, comprising a controllable braking system and an electronic control unit (3), **characterized in that** it comprises a sensor (4) for measuring the longitudinal speed of the vehicle, means (5) of measuring the engine torque transmitted to the wheels of the vehicle (1), a brake pedal position sensor (9), a clutch pedal position sensor (10), means (13) capable of supplying the engaged ratio, means (19) of measuring or estimating the slope of the carriageway on which the vehicle (1) is engaged, processing means (18) capable of calculating a braking command (17) limiting the acceleration of the vehicle (1) according to said slope, based on data comprising the algebraic speed of the vehicle, the position of the brake pedal, the position of the clutch pedal, the torque transmitted to the drive wheels, and a value indicative of the ratio engaged, and control means (16) able to apply said braking command to the brake actuators (2).

2. System according to Claim 1, **characterized in that** it also comprises auxiliary slowing-down devices (21), said processing means (18) being able to calculate respectively braking commands for said auxiliary slowing-down devices (21), and said control means (16) being able to apply said braking commands respectively to the auxiliary slowing-down devices (21).

3. System according to Claim 1 or 2, **characterized in that** it also comprises a clutch pedal position sensor (10) and means (13) for supplying the engaged ratio.

4. System according to any one of Claims 1 to 3, **characterized in that** the means (5) of measuring the engine torque transmitted to the vehicle (1) comprise one or more clutch position sensors and an engine rotation speed sensor, or an engaged transmission ratio sensor.

5. System according to Claim 3 or 4, **characterized in that** the processing means (18) comprise:

a preprocessing block (25) receiving as input data comprising the algebraic speed of the vehicle, the position of the brake pedal, the position of the clutch pedal, the torque transmitted to the drive wheels, and a value indicative of the engaged ratio; and
a processing block (26) receiving as input data, transmitted by said preprocessing block, comprising the algebraic speed of the vehicle, an acceleration set point, a force representative of the will of the driver due to the action of the driver on the brake pedal, a braking disturbance, and the longitudinal force transmitted to the drive wheels.

6. System according to Claim 5, **characterized in that**, when the vehicle (1) is also equipped with a wheel anti-lock braking system (15), the preprocessing block (25) also receives as input a signal indicating whether the wheel anti-lock braking system is active or inactive, and, if it is active, stops the processing means (18).

7. System according to Claim 5 or 6, **characterized in that** the preprocessing block (25) is able to calculate the longitudinal force (F$_{wheels}$) transmitted to the drive wheels and to transmit the result to the processing block (26), said calculation using the following relation for a mechanical gearbox:

$$F_{wheels} = \frac{C_{clutch}}{R_{box} \cdot R_{bridge} \cdot Radius_{r\_m}}$$

in which:

$F_{wneels}$ represents the longitudinal force transmitted to the drive wheels, in N;
$C_{clutch}$ is the torque transmitted to the drive wheels transmitted to the preprocessing block (25), in Nm;
$R_{box}$ is the ratio of the output and input rotation speeds of the transmission shaft, dependent in a predetermined manner on the engaged ratio transmitted to the preprocessing block (25), adimensional;
$R_{bridge}$ is the ratio of the predetermined radii of the gears of the drive wheel transmission bridge, adimensional; and
$Radius_{r\_m}$ is the predetermined radius of the drive wheels, in m.

8. System according to any one of Claims 5 to 7, **characterized in that** the preprocessing block (25) is able to calculate an acceleration set point for the processing block (26), by an estimation means, or from information supplied by an acceleration sensor, and to calculate a braking command by using the position of the brake pedal (9).

9. System according to any one of Claims 5 to 8, **characterized in that** the preprocessing block (25) is able to calculate information indicative of the position of the gear lever, in order to be able to recalculate the longitudinal force ($F_{wheels}$) transmitted to the drive wheels, upon a change of speed.

10. System according to Claim 9, **characterized in that** the preprocessing block (25) comprises two Boolean inputs for calculating said information indicative of the position of the gear lever by means of the following relation:

$$gbc = Ratio\_engagement - 2 \times Reverse\_engagement$$

in which :

gbc represents the information indicative of the position of the gear lever;
Ratio_engagement is a Boolean input representing the engagement or nonengagement of a ratio; and
Reverse_engagement representing whether or not reverse gear is engaged.

11. System according to any one of Claims 5 to 9, **characterized in that** the preprocessing block (25) is able to estimate the disturbance, said disturbance being an acceleration defined by the following algebraic relation:

$$A_{setpoint} = A_{engine} + A_{braking} + A_{disturbance}$$

in which

$A_{setpoint}$ is the algebraic longitudinal acceleration of the vehicle transmitted by the preprocessing block (25) to the processing block (26), in m/s$^2$;
$A_{engine}$ is the algebraic longitudinal acceleration, calculated by the preprocessing block (25), due to the drive forces ($F_{wheels}$), that is to say, the ratio of the drive forces ($F_{wheels}$) and the weight of the vehicle ($M_{venicle}$) measured or estimated, in m/s$^2$;
$A_{braking}$ is the algebraic longitudinal acceleration relative to the force representative of the will of the driver and due to the action of the driver on the brake pedal, in m/s$^2$; and
$A_{disturbance}$ is the algebraic longitudinal acceleration due to disturbances acting on the vehicle and calculated by the preprocessing block (25), in m/s$^2$.

12. System according to Claim 10, **characterized in that** the preprocessing block (25) is able to calculate said disturbance by integrating the difference between the speed estimated by means of calculating the speed of the vehicle (1) and the measured speed, by the Forward Euler method.

**13.** System according to Claim 10 or 11, **characterized in that** the processing block (26) is able to limit the acceleration of the vehicle (1) when the force representative of the will of the driver, calculated by the preprocessing block (25), is below a braking set point calculated by said processing block (26), necessary to keep the acceleration of the vehicle (1) less than that due to the slope,

by comparing the acceleration set point to the disturbance, when the acceleration set point, the disturbance, and the speed are of the same sign, and the absolute value of the acceleration set point is less than the absolute value of the disturbance, and by calculating said braking command to keep the acceleration of the vehicle below that due to the slope by means of the following equations:

$$\begin{cases} A_{braking} = -(A_{disturbance} + A_{engine} - A_{set\ point}) \\ F_{braking} = A_{braking} \cdot M_{vehicle} \end{cases}$$

in which:

$A_{set}$ point is the algebraic longitudinal acceleration of the vehicle transmitted by the preprocessing block (25) to the processing block (26), in m/s$^2$;

$A_{engine}$ is the algebraic longitudinal acceleration, calculated by the preprocessing block (25), due to the drive forces ($F_{wheels}$), that is to say, the ratio of the drive forces ($F_{wheels}$) and the weight of the vehicle ($M_{venicle}$) measured or estimated, in m/s$^2$;

$A_{braking}$ is the algebraic longitudinal acceleration relative to the force representative of the will of the driver and due to the action of the

$A_{disturbance}$ driver on the brake pedal, in m/s$^2$; and is the algebraic longitudinal acceleration due to disturbances acting on the vehicle and calculated by the preprocessing block (25), in m/s$^2$;

$F_{braking}$ is the braking command estimated by the processing block (26) to keep the acceleration of the vehicle below that due to gravity, in N; and

$M_{vehicle}$ is the weight of the vehicle (1), measured or estimated, in kg;

and by ordering a braking command equal to the maximum of the force representative of the will of the driver calculated by the preprocessing block (25) and of the braking command estimated by the processing block (26) to keep the acceleration of the vehicle below that due to the slope.

**14.** Method of controlling the acceleration of a motor vehicle (1), **characterized in that** a braking command limiting the acceleration of the vehicle (1) is calculated according to the slope of the carriageway on which the vehicle (1) is engaged, from data comprising the algebraic speed of the vehicle, the position of the brake pedal, the position of the clutch pedal, the torque transmitted to the drive wheels, and a value indicative of the engaged ratio, and said braking command is applied to the brake actuators.

**Patentansprüche**

**1.** Verfahren zur Steuerung der Beschleunigung eines Kraftfahrzeugs (1) auf einer Gefällstrecke, das ein steuerbares Bremssystem und eine elektronische Steuereinheit (3) enthält, **dadurch gekennzeichnet, dass** es einen Sensor (4) zur Messung der Längsgeschwindigkeit des Fahrzeugs, Einrichtungen (5) zur Messung des auf die Räder des Fahrzeugs (1) übertragenen Antriebdrehmoments, einen Positionssensor (9) des Bremspedals, einen Positionssensor (10) des Kupplungspedals, Einrichtungen (13), die fähig sind, das eingelegte Übersetzungsverhältnis zu liefern, Einrichtungen (19) zur Messung oder Schätzung des Gefälles der Straße, auf der das Fahrzeug (1) fährt, Verarbeitungseinrichtungen (18), die eine Bremssteuerung (17) berechnen können, die die Beschleunigung des Fahrzeugs (1) in Abhängigkeit vom Gefälle ausgehend von Daten begrenzt, die die algebraische Geschwindigkeit des Fahrzeugs, die Position des Bremspedals, die Position des Kupplungspedals, das an die Antriebsräder übertragene Drehmoment und einen für das eingelegte Übersetzungsverhältnis repräsentativen Wert enthalten, und Steuereinrichtungen (16) enthält, die die Bremssteuerung an die Bremsaktuatoren (2) anwenden können.

**2.** System nach Anspruch 1, **dadurch gekennzeichnet, dass** es außerdem Hilfsabbremsvorrichtungen (21) enthält, wobei die Verarbeitungseinrichtungen (18) jeweils Bremssteuerungen für die Hilfsabbremsvorrichtungen (21) berechnen können, und die Steuereinrichtungen (16) jeweils die Bremssteuerungen an die Hilfsabbremseinrichtungen (21) anwenden können.

3. System nach Anspruch 1 oder 2, **dadurch gekennzeichnet, dass** es außerdem einen Positionssensor (10) des Kupplungspedals und Einrichtungen (13) zur Lieferung des eingelegten Übersetzungsverhältnisses enthalten.

4. System nach einem der Ansprüche 1 bis 3, **dadurch gekennzeichnet, dass** die Einrichtungen (5) zur Messung des an das Fahrzeug (1) übertragenen Antriebdrehsmoments einen oder mehrere Positionssensoren einer Kupplung und einen Drehgeschwindigkeitssensor des Motors oder einen Sensor des eingelegten Übersetzungsverhältnisses enthalten.

5. System nach Anspruch 3 oder 4, **dadurch gekennzeichnet, dass** die Verarbeitungseinrichtungen (18) enthalten:

   einen Vorverarbeitungsblock (25), der am Eingang Daten empfängt, die die algebraische Geschwindigkeit des Fahrzeugs, die Position des Bremspedals, die Position des Kupplungspedals, das an die Antriebsräder übertragene Drehmoment und einen das eingelegte Übersetzungsverhältnis anzeigenden Wert enthalten; und einen Verarbeitungsblock (26), der am Eingang vom Vorverarbeitungsblock übertragene Daten empfängt, die die algebraische Geschwindigkeit des Fahrzeugs, einen Beschleunigungssollwert, eine für den Willen des Fahrers aufgrund der Einwirkung des Fahrers auf das Bremspedal repräsentative Kraft, eine Bremsstörung und die an die Antriebsräder übertragene Längskraft enthalten.

6. System nach Anspruch 5, **dadurch gekennzeichnet, dass**, wenn das Fahrzeug (1) außerdem mit einem Antiblokkier-Bremssystem (15) ausgestattet ist, der Vorverarbeitungsblock (25) außerdem am Eingang ein Signal empfängt, das anzeigt, ob das Antiblockier-Bremssystem aktiv oder inaktiv ist, und wenn es aktiv ist, die Verarbeitungseinrichtungen (18) anhält.

7. System nach Anspruch 5 oder 6, **dadurch gekennzeichnet, dass** der Vorverarbeitungsblock (25) die an die Antriebsräder übertragene Längskraft ($F_{Räder}$) berechnen und das Ergebnis an den Verarbeitungsblock (26) übertragen kann, wobei die Berechnung die folgende Beziehung für ein mechanisches Getriebe verwendet:

$$F_{Räder} = \frac{C_{Kuppl}}{R_{Getriebe} . R_{Brücke} \cdot Radius_{r\_m}}$$

   in der:

   $F_{Räder}$ die an die Antriebsräder übertragene Längskraft ist, in N;
   $C_{Kuppl}$ das an die Antriebsräder übertragene Drehmoment ist, das an den Vorverarbeitungsblock (25) übertragen wird, in Nm;
   $R_{Getriebe}$ das Eingangs- und Ausgangs-Drehgeschwindigkeitsverhältnis der Antriebswelle ist, das in vorbestimmter Weise von dem eingelegten Übersetzungsverhältnis abhängt, das an den Vorverarbeitungsblock (25) übertragen wird, adimensional;
   $R_{Brücke}$ das Verhältnis der vorbestimmten Radien der Zahnradgetriebe der Übertragungsbrücke der Antriebsräder ist, adimensional; und
   $Radius_{r\_m}$ der vorbestimmte Radius der Antriebsräder ist, in m.

8. System nach einem der Ansprüche 5 bis 7, **dadurch gekennzeichnet, dass** der Vorverarbeitungsblock (25) einen Beschleunigungssollwert für den Verarbeitungsblock (26) durch eine Schätzeinrichtung oder ausgehend von einer von einem Beschleunigungssensor gelieferten Information berechnen kann, und eine Bremssteuerung unter Verwendung der Position des Bremspedals (9) berechnen kann.

9. System nach einem der Ansprüche 5 bis 8, **dadurch gekennzeichnet, dass** der Vorverarbeitungsblock (25) eine die Position des Ganghebels bezeichnende Information berechnen kann, um die an die Antriebsräder übertragene Längskraft ($F_{Räder}$) bei einem Gangwechsel erneut berechnen zu können.

10. System nach Anspruch 9, **dadurch gekennzeichnet, dass** der Vorverarbeitungsblock (25) zwei Boolesche Eingaben enthält, um die die Stellung des Ganghebels anzeigende Information mittels der folgenden Beziehung zu berechnen:

```
gbc            =           Einlegen_Übersetzungsverhältnis-
2xEinlegen_Rückwärtsgang
```

in der:

gbc die die Position des Ganghebels anzeigende Information darstellt;

Einlegen_Übersetzungsverhältnis eine Boolesche Eingabe ist, die das Einlegen oder nicht eines Übersetzungsverhältnisses darstellt; und

Einlegen_Rückwärtsgang darstellt, ob der Rückwärtsgang eingelegt ist oder nicht.

**11.** System nach einem der Ansprüche 5 bis 9, **dadurch gekennzeichnet, dass** der Vorverarbeitungsblock (25) die Störung schätzen kann, wobei die Störung eine Beschleunigung ist, die durch die folgende algebraische Beziehung definiert wird:

$$A_{Sollwert} = A_{Motor} + A_{Bremsen} + A_{Störung}$$

in der:

$A_{Sollwert}$ die algebraische Längsbeschleunigung des Fahrzeugs ist, die durch den Vorverarbeitungsblock (25) an den Verarbeitungsblock (26) übertragen wird, in m/s$^2$; $A_{Motor}$ die algebraische Längsbeschleunigung ist, berechnet durch den Vorverarbeitungsblock (25), die auf die Antriebskräfte ($F_{Räder}$) zurückzuführen ist, d.h. das Verhältnis der Antriebskräfte ($F_{Räder}$) und der gemessenen oder geschätzten Masse des Fahrzeugs ($M_{Fahrzeug}$), in m/s$^2$; $A_{Bremsen}$ die algebraische Längsbeschleunigung bezüglich der für den Willen des Fahrers repräsentativen und auf die Einwirkung des Fahrers auf das Bremspedal zurückzuführenden Kraft ist, in m/s$^2$; und $A_{Störung}$ die algebraische Längsbeschleunigung aufgrund von Störungen ist, die auf das Fahrzeug einwirken und vom Vorverarbeitungsblock (25) berechnet werden, in m/s$^2$.

**12.** System nach Anspruch 10, **dadurch gekennzeichnet, dass** der Vorverarbeitungsblock (25) die Störung durch Integration der Differenz zwischen der von den Berechnungseinrichtungen der Geschwindigkeit des Fahrzeugs (1) geschätzten Geschwindigkeit und der gemessenen Geschwindigkeit durch das Forward-Euler-Verfahren berechnen kann.

**13.** System nach Anspruch 10 oder 11, **dadurch gekennzeichnet, dass** der Verarbeitungsblock (26) die Beschleunigung des Fahrzeugs (1) begrenzen kann, wenn die für den Willen des Fahrzeugs repräsentative Kraft, die vom Vorverarbeitungsblock (25) berechnet wird, unter einem Bremssollwert liegt, der vom Verarbeitungsblock (26) berechnet wird und notwendig ist, um die Beschleunigung des Fahrzeugs (1) unter derjenigen zu halten, die auf das Gefälle zurückzuführen ist,

indem der Beschleunigungssollwert mit der Störung verglichen wird, wenn der Beschleunigungssollwert, die Störung und die Geschwindigkeit das gleiche Vorzeichen haben, und der Absolutwert des Beschleunigungssollwerts unter dem Absolutwert der Störung liegt, und indem die Bremssteuerung, um die Beschleunigung des Fahrzeugs unter derjenigen zu halten, die auf das Gefälle zurückzuführen ist, mittels der folgenden Gleichungen berechnet wird:

$$\begin{cases} A_{Bremsen} = -\left(A_{Störung} + A_{Motor} - A_{Sollwert}\right) \\ F_{Bremsen} = A_{Bremsen}.M_{Fahrzeug} \end{cases}$$

in denen:

$A_{Sollwert}$ die algebraische Längsbeschleunigung des Fahrzeugs ist, die vom Vorverarbeitungsblock (25) an den Verarbeitungsblock (26) übertragen wird, in m/s$^2$; $A_{Motor}$ die algebraische Längsbeschleunigung ist, die vom Vorverarbeitungsblock (25) berechnet wird, verursacht durch die Antriebskräfte ($F_{Räder}$), d.h. das Verhältnis der Antriebskräfte ($F_{Räder}$) und der Masse des Fahrzeugs ($M_{Fahrzeug}$), gemessen oder geschätzt, in m/s$^2$; $A_{Bremsen}$ die algebraische Längsbeschleunigung bezüglich der Kraft ist, die für den Willen des Fahrers repräsentativ und auf die Einwirkung des Fahrers auf das Bremspedal zurückzuführen ist, in m/s$^2$; und

$A_{Störung}$ die algebraische Längsbeschleunigung aufgrund von Störungen ist, die auf das Fahrzeug einwirken und vom Vorverarbeitungsblock (25) berechnet werden, in m/s$^2$ ;

$F_{Bremsen}$ die vom Verarbeitungsblock (26) geschätzte Bremssteuerung ist, um die Beschleunigung des Fahrzeugs unter derjenigen zu halten, die auf die Schwerkraft zurückzuführen ist, in N; und

$M_{Fahrzeug}$ die Masse des Fahrzeugs (1) ist, gemessen oder geschätzt, in kg;

und indem eine Bremssteuerung gleich dem Maximum der für den Willen des Fahrers repräsentativen Kraft, die vom Vorverarbeitungsblock (25) berechnet wird, und der vom Verarbeitungsblock (26) geschätzten Bremssteuerung gesteuert wird, um die Beschleunigung des Fahrzeugs unter derjenigen zu halten, die auf das Gefälle zurückzuführen ist.

14. Verfahren zur Steuerung der Beschleunigung eines Kraftfahrzeugs (1), **dadurch gekennzeichnet, dass** eine Bremssteuerung berechnet wird, die die Beschleunigung des Fahrzeugs (1) in Abhängigkeit vom Gefälle der Straße begrenzt, auf der das Fahrzeug (1) fährt, ausgehend von Daten, die die algebraische Geschwindigkeit des Fahrzeugs, die Position des Bremspedals, die Position des Kupplungspedals, das an die Antriebsräder übertragene Drehmoment und einen Wert enthalten, der das eingelegte Übersetzungsverhältnis anzeigt, und die Bremssteuerung an die Bremsaktuatoren angewendet wird.

# FIG.1

# FIG.2

18

Vitesse algébrique ～27

Position pédale de frein ～28

Position pédale d'embrayage ～29

$C_{emb}$ ～30

Rapport engagé ～31

Signal ABS ～32

25 Pré-traitement

Vitesse algébrique 33

$A_{consigne}$ 34

$A_{perturbation}$ 35

$F_{roues}$ 36

$F_{freinage\_conducteur}$ 37

26 Traitement

Commande

～17

EP 1 538 042 B1

FIG.3

**EP 1 538 042 B1**

**RÉFÉRENCES CITÉES DANS LA DESCRIPTION**

**Documents brevets cités dans la description**

- WO 9929531 A